Europäisches Patentamt

European Patent Office

Office européen des brevets

(19)

(11) **EP 1 568 793 A1**

(12) **EUROPEAN PATENT APPLICATION**

(43) Date of publication:
**31.08.2005  Bulletin 2005/35**

(51) Int Cl.⁷: **C22B 5/10**, C21B 13/00

(21) Application number: **04075552.2**

(22) Date of filing: **23.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Corus Technology BV**
**1970 CA Ijmuiden (NL)**

(72) Inventor: **Kooij, Christiaan Johannes**
**1815 LS Alkmaar (NL)**

(74) Representative:
**Herman de Groot, Johan Willem et al**
**Corus Technology BV**
**Corus Intellectual Property Department 3H18**
**P.O. Box 10000**
**1970 CA Ijmuiden (NL)**

(54) **Method and apparatus for reducing metal-oxygen compounds**

(57)    The present invention relates to a method for reducing metal-oxygen compounds in a reduction reaction in which carbon is used as a reducing agent for reducing the metal-oxygen compounds. The invention is characterised in that a first metal is used to aid the reduction reaction. The invention also relates to an apparatus for reducing metal-oxygen compounds according to a method in which carbon is used as a reducing agent for reducing the metal-oxygen compounds and wherein a first metal is used to aid the reduction reaction. The reactor of the apparatus comprises a first reaction region for generating carbon from carbon monoxide by the Boudouard reaction and a second reaction region for reducing the metal-oxygen compounds.

Fig. 1.

**Description**

The present invention relates to a method for reducing metal-oxygen compounds with carbon as an agent for reducing the metal-oxygen compounds. The invention also relates to an apparatus for reducing metal-oxygen compounds with carbon as an agent for reducing the metal-oxygen compounds.

Reduction of metal-oxygen compounds, such as metal-oxides, for instance iron oxides, has been performed in large-scale reduction furnaces. For the reduction of iron-oxygen compounds, the blast furnace has been the workhorse for the production of pig iron from iron ore for over a century. The primary reductant and source of chemical energy in these blast furnaces is coke. Coke is produced by baking coal in the absence of oxygen in order to remove the volatile hydrocarbons and to give the coke the critical properties for stable blast furnace operation.

Coke making is problematic from an environmental perspective as many of the volatile hydrocarbons are hazardous. Also not all types of coal are suitable for coke making. Moreover, demand has decreased for the by-products of coke making.

Therefore, decreasing the coke rate and the over-all fuel rate of the blast furnace has been a major focus of recent developments. Also new technologies to circumvent the blast furnace process, such as direct reduction of iron ore, have been developed.

Direct reduction involves the production of iron by reduction of iron ore with a reducing agent, which can be a solid reducing agent, or a gaseous reducing agent. The solid reducing agents may be coal of any size, instead of coke. Examples of gaseous reducing agents are natural gas and carbon monoxide. Ores for direct reduction have to meet stringent specifications with high percentage of Fe and low content of unwanted elements.

Direct reduction of iron ore may produce a solid direct-reduced iron product or, at high operating temperatures or in combination with a smelting device, a liquid product.

The product of a direct reduction process could be discharged in a second reactor for melting and optional further refining, or cooled and stored for later use.

At present, dust and sludge from an integrated steelworks is recycled as raw material in the ore preparation stage. These waste materials, often referred to as 'fines', may contain iron-containing compounds such as iron-oxides. However, due to the high content of metals such as zinc in these fines, the accumulation of such elements, and the limitations of the amount of these metals for charging into a blast furnace, these waste materials have often to be recycled in an other way or disposed of, resulting in additional costs or burdening of the environment.

A known process for reduction of iron ore is based on the direct reaction of coal and lump iron ore or pellets in a rotary kiln. Another known process is based on the reduction of composite pellets containing iron oxide and carbon from for example coal, coke or charcoal in a rotary hearth furnace. The off-gasses from the reduction reaction can be post combusted in the furnace to provide a portion of the heat required for the process. Another known process involves direct reduction of fine iron ore in a fluidised bed reactor.

A major disadvantage of these known reduction processes is that they operate at high temperatures. For example, the rotary hearth process operates at temperatures of about 1250 °C. If these processes are based upon the use of coal, a further disadvantage is the development of large volumes of carbon monoxide, hydrogen and complex and hazardous hydrocarbons. Condensation of these hydrocarbons must be avoided which requires removal or post-combustion of the off gasses while re-oxidation of the metal must be prevented. Also, because of the high operating temperatures and consequent heat losses, and the generation of large amounts of carbon monoxide, the energy efficiency of the direct reduction processes is generally poor resulting in a high carbon consumption rate. The high operating temperatures also result in the formation of significant amounts of harmful nitrogen-oxygen compounds (NOx-gases). Furthermore, direct reduction technologies based on the use of coal have to deal with higher levels of sulphur because of the presence of sulphur in the coal.

It is an object of the invention to provide a method and an apparatus for reducing metal-oxygen compounds which operates at relatively low temperatures.

It is a further object of this invention to provide a method and an apparatus for reducing metal-oxygen compounds producing lower volumes of hazardous off gases such as for example hydrocarbons and/or NOx-gases.

It is also an object of the invention to provide a method and an apparatus for reducing metal-oxygen compounds, which results in an increased carbon efficiency per unit of weight of reduced metal.

It is also an object of the invention to provide a method and an apparatus for reducing metal-oxygen compounds, which has an improved energy efficiency and provides a product with a low sulphur content.

It is a further object of the invention to provide a method and an apparatus for reducing a mixture of different metal-oxygen compounds, which results in a metal alloy.

To achieve one ore more of these objects a method is provided for reducing metal-oxygen compounds in which carbon is used as a reducing agent in a reduction reaction for reducing the metal-oxygen compounds wherein a first metal is used to aid the reduction reaction. This first metal acts as a catalyst.

It was surprisingly found that an addition of a first metal greatly enhances the reduction rate of the metal-oxygen in which carbon is used as a reducing agent for reducing the metal-oxygen compounds. It was also found that this reduction takes place at significantly lower temperatures in comparison to the known types of direct reduction processes. For example, the known types for reduction of iron-oxygen compounds employ operating temperatures of over 950 °C. The lower operating temperature of the process according to the invention will also result in lower output of harmful nitrogen-oxygen compounds as well as in a reduced heat loss of the installations.

It is remarked that in known reduction processes, like the reduction process of iron-oxygen compounds in an iron producing blast furnace, the metal formed in the reduction process, does not aid the reduction reaction because it does not act as a catalyst. This is believed to be caused by the fact that in such known processes and in such a blast furnace, the process conditions for the catalytic effect of the formed metal on the reduction reaction for reducing the iron-oxygen compounds are not fulfilled.

In an embodiment of the invention, at least part of the first metal is formed from an intermediate compound taken from the group of compounds consisting of metalcarbides, metalhydrides and metalnitrides wherein the metal in the compound is the first metal, and wherein the compound optionally comprises oxygen. This intermediate compound may be added to the metal-oxygen compounds. The intermediate compound such as a metalcarbide enables forming of the first metal thereby aiding the reduction reaction of the metal-oxygen compounds. Other intermediate compounds are for example metalhydrides, metalnitrides or mixtures of metalcarbides and/or metalhydrides and/or metalnitrides. Another example of an intermediate compound is metalcarbonyl, which may dissociate into a metal and carbon monoxide. Metalcarbonyl is quite expensive, and is not normally used in a bulk metal production process.

The advantage of an intermediate compound is that the first metal which is formed upon decomposition of the intermediate compound, is finely distributed thereby enabling to aid the reduction reaction effectively. The first metal may be formed from the intermediate compound (immediately) prior to the reduction reaction for reducing the metal-oxygen compounds. In case the intermediate compound is a metalcarbide wherein the metal is the first metal, the first metal and the carbon, both become finely distributed upon decomposition of the intermediate compound, thereby enabling the first metal to aid the reduction reaction effectively and the carbon to act as a reducing agent in the reduction reaction effectively.

In an embodiment of the invention the carbon, which is used as a reducing agent for reducing the metal-oxygen compounds, is amorphous carbon and/or crystalline carbon, preferably graphite, because the reaction rate of the reduction reaction is considerably increased. Crystalline carbon, or graphite in particular, proved to be a preferred form of carbon. In an embodiment of the invention, carbon is in the form of powder which achieves the effect of increasing the number of contact points between reactants thereby also enhancing the reduction reaction rate. The first metal for the reduction reaction of the metal-oxygen compounds can be added to the metal-oxygen compounds at any stage of the process provided the first metal is at least present at the time the reduction of the metal-oxygen compounds should occur.

In a preferred embodiment of the invention for reducing metal-oxygen compounds, in which carbon is used as a reducing agent for reducing the metal-oxygen compounds, carbon monoxide is brought into contact with the metal-oxygen compounds and the carbon and carbon dioxide are formed by the Boudouard reaction from the carbon monoxide with the aid of a second metal. The carbon is referred to as Boudouard-carbon and has the crystalline structure of graphite. The carbon monoxide may be substantially pure carbon monoxide, but it may also be part of a gaseous mixture comprising carbon monoxide. During start-up of the process of reducing the metal-oxygen compounds, but also during the process of reducing the metal-oxygen compounds, compounds similar to Boudouard-carbon and in a suitable form, such as graphite powder, may be added to the metal-oxygen compounds to serve as the reducing agent for at least part of the reduction of the metal-oxygen compounds. The second metal performs the role associated with a catalyst.

The Boudouard-carbon is generated by dissociation of carbon-monoxide by the Boudouard reaction:

$$2\,CO \leftrightarrow C + CO_2 \qquad (1)$$

Surprisingly, it was found that this Boudouard carbon, which has a graphite structure, is a reducing agent which, in combination with a first metal, very effectively reduces the metal-oxygen compounds when the Boudouard-carbon, the first metal and the metal-oxygen compound are brought into contact.

Surprisingly it was also found that the first metal not only aids the reduction of the metal-oxygen compounds, but it may also have a beneficial effect on the formation of the Boudouard-carbon by the Boudouard reaction. The first metal may be added to the process but some of it may also be formed by the reduction of the metal-oxygen compounds already occurring at the lower temperature at which the Boudouard reaction is performed.

In an embodiment of the invention, in the reduction reaction for reducing the metal-oxygen compounds the oxygen of the metal-oxygen compounds is mainly bound to the carbon which is formed from the carbon monoxide by the Boudouard reaction. When using carbon as the primary reducing agent, the process can be operated at low temperatures. This is the case when coal is used as the primary source of carbon. If however natural gas would be chosen as the primary source of carbon, the amount of hydrogen which is generated from the cracking of the natural gas (usually comprising large amounts of hydrocarbons such as methane) would adversely affect the operating conditions thereby reducing the advantages, particularly the efficient use of fossil fuel and the relatively low operating temperatures, to be obtained by the method according to the invention.

Small amounts of hydrogen are known to promote the formation of Boudouard-carbon and carbon dioxide from carbon monoxide by the Boudouard reaction. In case of using pure carbon monoxide, small amounts of hydrogen may be added to the carbon monoxide. Preferably, the amount of hydrogen is below 8 vol.%, more preferably below 6 vol.%. The hydrogen does not play a significant role in the reduction of the metal-oxygen compounds due to the chosen operating conditions. Reduction of metal-oxygen compounds by hydrogen takes place at significantly higher temperatures, thereby undoing the advantages of the method according to the invention.

In another embodiment of the invention more than 50%, preferably more than 70%, more preferably more than 80%, even more preferably more than 90% of the oxygen of the metal-oxygen compounds is bound to the Boudouard-carbon in the reduction reaction for reducing the metal-oxygen compounds. In case the gaseous mixture comprising carbon monoxide is produced for instance by gasifying coal, the gaseous mixture may also comprise small amounts of hydrogen.

It is possible to add compounds similar to Boudouard-carbon and in a suitable form into the process, or compounds which generate Boudouard-carbon such as metalcarbides, for instance during start-up. If this is the case, the Boudouard carbon in the abovementioned embodiments consists of the Boudouard carbon formed from the carbon-monoxide and/or the added carbon similar to Boudouard-carbon and in a suitable form and/ or the carbon originating from the metalcarbides. Since the gaseous reaction products of the process according to the invention comprise a high level of carbon-dioxide gas in comparison to the off-gases of the conventional processes, the carbon is efficiently used, thereby also reducing the amount of used fossil fuel. The amount of carbon used per unit of weight of reduced metal is consequently lower in the process according to the invention.

Also, since Boudouard carbon from carbon monoxide instead of carbon in the form of coal is used as the reduction agent in the process, the gaseous reaction products of the process according to the invention do not contain the coal-related hazardous hydrocarbons. The sulphur content of the reacting solids is not affected if the gaseous mixture comprising the carbon-monoxide does not comprise sulphur-compounds. In case the gaseous mixture comprising the carbon-monoxide comprises hydrocarbons and/or sulphur-compounds, the gaseous reaction products of the process according to the invention will contain a lower content of these hydrocarbons and/or sulphur-compounds, because at least part of the heavy fraction of the hydrocarbons will have been cracked and/or used during the process. The sulphur-compounds may be neutralised for instance by a known calcium treatment into calcium-sulphur compounds such as CaS which can be separated from the metallic part for instance in a cyclone.

In a further embodiment of the invention the first metal is the same as the second metal, thereby introducing to as low an amount as possible other metals to the products of the reduction reaction for reducing the metal-oxygen compounds. In still a further embodiment of the invention the first and/or second metal is the same as the metal in the metal-oxygen compounds. When producing a single metal material the amount of other elements is to be kept as low as possible to prevent contamination with other metals. When producing an alloy, it may be advantageous to use one or more metals as a first and/or second metal that are different from the metal in the metal-oxygen compound.

In a preferred embodiment of the invention the reduction reaction of the metal-oxygen compounds is performed in a continuous process. In a further preferred embodiment the carbon monoxide moves relative to the mixture of the metal-oxygen compounds, the reducing agent for the reduction of the metal-oxygen compounds and the first and/or second metal. In a further preferred embodiment, the metal-oxygen compounds are transported in one direction and the carbon monoxide is transported in another direction. In a further preferred embodiment the metal-oxygen compounds and the carbon monoxide are transported in counter flow. Also, at least part of the gaseous reaction products may be reintroduced into the process, thereby reducing the amount of fresh carbon monoxide that is to be added. Moreover, at least part of the substantially solid product of the reduction reaction of the metal-oxygen compounds may be reintroduced into the process as a first and/or second metal for the reduction reactions, thereby reducing the amount of fresh first and/or second metal that is to be added.

For reasons of reaction kinetics the operating temperature in the first reaction region where the Boudouard reaction is performed is preferably below 650 °C, preferably between 300 and 600 °C and more preferably between 450 and 550 °C. In a preferred embodiment of the invention the metal-oxygen compounds comprise iron-oxygen compounds such as iron oxide and/or iron hydroxide and/or iron-carbonate. Also the first and/or second metal may comprise iron thereby limiting the amount of non-iron metals in the resulting product of the reduction reaction of the iron-oxygen compounds. For reasons of reaction kinetics the operating temperature in the reaction region where the reduction of the metal-oxygen compounds is performed is preferably between 550 and 900 °C, preferably between 650 and 850 °C, and more preferably between 700 and 775 °C. The process according to the invention as described hereinabove is performed essentially at atmospheric pressures. It is obvious for the skilled person that performing the method according to the invention at non-atmospheric pressures will shift the balance of the reactions. The invention also encompasses performing the method at sub atmospheric or super atmospheric pressures, and it also encompasses using the method according to the invention in such a way that the Boudouard reaction occurs at a different pressure than the reduction of the metal-oxygen compounds.

It should be noted that due to the nature of the Boudouard reaction and the reduction of the metal-oxygen compounds in terms of kinetics there may be an overlap between the reaction region where the carbon is formed from the carbon monoxide by the Boudouard reaction on the one hand and the reaction region where the reduction reaction of the metal-oxygen compounds is performed mainly occurs on the other hand, because some Boudouard carbon may still be formed in the reaction region where the reduction reaction of the metal-oxygen compounds is performed and/or because some metal-oxygen compounds may at least partly already have been reduced in the reaction region where the Boudouard reaction is performed, thereby providing at least part of a first metal for the reduction reaction.

Since the number of contact points between the reducing agent, the first metal and the metal-oxygen compound determines the kinetics of the reduction process of the metal-oxygen compound by the process according to the invention, it is preferable that the metal-oxygen compound or the metal-oxygen compound and the first metal are in the form of a powder. The grain size of these powders should preferably be below 1 mm, but more preferably be 100 μm or lower. These powders or mixtures thereof may be pretreated to form conglomerates such as pellets or sinter, which have a sufficient porosity for the carbon monoxide to access the metal-oxygen compound or the first metal and the metal-oxygen compound in the conglomerate. Although the process according to the invention already works when small amounts of a first metal are present, it has been found that the amount of first metal should preferably be higher than 1% in weight of the metal-oxygen compounds, more preferably be higher than 5% in weight and preferably be about 10% in weight at the beginning of the phase in the process where the reduction of the metal-oxygen compounds is performed.

The invention also relates to a method wherein the reduction reaction is performed in a shaft furnace, such as a blast furnace. The invention is also embodied in a method wherein the metal-oxygen compounds comprise iron-oxygen-compounds and wherein the reduction reaction of the iron-oxygen compounds is performed in a shaft furnace, such as a blast furnace, to produce iron. It was found that application of the process according to the invention in the conventional blast furnace process involving the addition of iron as a first metal for the reduction reaction of iron ore results in a disproportionate increase of molten iron. For instance the addition of the iron as a first metal, for example in the form of a powder, to iron ore to form a mixture to produce conventional pellets therefrom, may supply the mixture of iron-oxygen compounds and iron as a first metal which enter the blast furnace process. During the course of the blast furnace process the pellets descend into the furnace and at the proper temperature the first generation of Boudouard carbon will start using the carbon monoxide gas which evolves from the burning coke in the lower regions of the blast furnace. The carbon monoxide gas is reduced to carbon dioxide gas and Boudouard carbon.

It should be noted that as a result of the high temperature in the conventional blast furnace process to produce pig iron from iron-oxides, the Boudouard-equilibrium (equation (1)) is shifted to the side where carbon-monoxide is formed from carbon and carbon-dioxide which was formed from cokes and oxygen that is blown in at the bottom of the blast furnace. No Boudouard-carbon is therefore formed in the conventional blast furnace process at the location in the blast furnace where the reduction of the iron-oxygen compounds is taking place.

In the process according to the invention The Boudouard carbon is believed to precipitate on the mixture of iron-oxygen compound and iron as a first metal and the combined materials descend further into the blast furnace. At the proper temperature the reduction of the iron-oxygen compounds will start, thereby reducing the iron-oxygen compound to iron. Ultimately, after descending even further into the blast furnace, the iron will melt and be ready for tapping from the blast furnace by known methods. It is obvious that the method according to the invention also works when the iron ore and the first metal, which may be iron, are added to the process in the form of a sintered product or any other conglomerate with a large contact area between the iron-ore, the first metal, and the carbon monoxide. As a result of the invention, the carbon-monoxide output of the blast-furnace process will be reduced due to the more efficient use of the carbon from the coke, and the output of molten iron from the blast furnace per time unit will increase disproportionally with regard to the added iron catalyst. In other words, the amount of molten iron per time unit than can be tapped from the furnace after the addition of x% of iron as a first metal per time unit to the iron-ore will result in more than 100+x% of molten iron per time unit which can be tapped, thereby making a more efficient use of the blast furnace by increasing the amount of newly formed iron from the iron-ore per time unit. Obviously, the usage of iron-ore per time unit has to be increased correspondingly.

Comparable application of the method and comparable increases in productivity may be achieved in any conventional direct reduction facility where metal ore, which may for example be sintered or be in the form of pellets, is processed. These facilities conventionally comprise at least one furnace where the reduction of the metal-oxygen compounds takes place wherein the furnace are for instance chosen from the group of furnaces comprising rotary hearth furnaces, rotary kiln furnaces, shaft furnaces, cyclone furnaces, continuous batch-type furnaces. The invention is therefore also embodied in a method wherein the reduction reaction of the metal-oxygen compounds is performed in a fluidised bed, a rotary hearth furnace, a rotary kiln furnace, a cyclone furnace, or a continuous batch-type furnace, to produce directly reduced metal. The invention is further also embodied in a method wherein the metal-oxygen compounds comprise iron-oxygen-compounds and in that the reduction process of the iron-oxygen compounds is performed in a fluidised bed, a rotary hearth furnace, a rotary kiln furnace, a cyclone furnace, or a continuous batch-type furnace.

The invention is also embodied in a method for reducing metal-oxygen compounds to produce a substantially solid material comprising a metallic part and a non-metallic part wherein the substantially solid material is treated to separate the metallic part from a non-metallic part such as gangue or slag. This separation step may be performed for instance in a cyclone.

The invention is also embodied in a method wherein the metallic part is compressed to reduce its porosity. The metallic part may also be rolled to form a slab, billet, bloom, rod, section or strip. This method enables omitting a step in the production process starting from ore and ending with slab, thereby significantly reducing costs and energy consumption. The metallic part may also be extruded to form a profile, section or rod, or be formed into a near net shape product. These products will require no, or only limited final processing.

The metallic part may also be used as feed material in a smelting operation, for instance using an Electric Arc Furnace or, in case of iron, as feed material in a steelmaking process at least as a partial replacement of scrap in for instance a Basic Oxygen Steelmaking process or a Siemens Martin Steelmaking process.

It should be noted that the invention also relates to a method wherein the metal in the metal-oxygen compound(s) is copper, cobalt, nickel, ruthenium, rhodium, palladium, platinum or iridium. It should be noted that for some metals more than one metal-oxygen compound exists, e.g. copper-oxide and copper-hydroxide. The invention also relates to a method wherein the metal-oxygen compounds comprises a mixture of at least two metal-oxygen compounds, wherein the metals in the metal-oxygen compounds are different and wherein the metals comprise Iron, Copper, Cobalt, Nickel, Ruthenium, Rhodium, Palladium, Platinum or Iridium, thereby producing a reduced product comprising at least two different metals. The advantage of this embodiment is that an alloy may be produced directly. The first metal or first metals may also be different from the metal or metals in the metal-oxygen compound.

A gaseous mixture comprising the carbon-monoxide, from which the carbon is to be formed by the Boudouard reaction, may be produced by treating in a standard gasifier according to a known process at least one carbon-containing compound which is chosen from a group of carbon-containing compounds comprising cokes, coal, charcoal, oil, plastics, natural gas, paper, biomass, tar sands, strongly polluted carbon-containing energy sources. Undesired elements like for instance sulphur may be removed from the gaseous mixture by an appropriate pre-treatment and/or post-treatment. The standard gasifier may be equipped with means to control the output of hazardous or unwanted by-products, which result from the gasification of the carbon-containing compound.

The invention also relates to an apparatus for reducing metal-oxygen compounds in a reduction reaction as described hereinabove characterised in that it comprises a reactor, an inlet for the metal-oxygen compounds and optionally the first and/or second metal, an inlet for a gaseous mixture comprising carbon-monoxide, optional heating or cooling means to heat or cool the different parts of the reactor, an outlet for the gaseous reaction products and an outlet for the substantially solid material resulting from the reduction of the metal-oxygen compounds.

In a further embodiment of the invention a reactor is used comprising a first reaction region and a second reaction region. In the first reaction region, nearer to the inlet for the metal-oxygen compounds, carbon is formed from the carbon monoxide by the Boudouard reaction as a result of the choice of operating parameters such as temperature and pressure, and in the second reaction region, nearer to the outlet of the substantially solid material resulting from the reduction of the metal-oxygen compounds, the metal-oxygen compounds are reduced as a result of the choice of operating parameters such as temperature and pressure. Generally, at similar operating pressures, the temperature of the first reaction region is lower than the temperature of the second reaction region.

In a preferred embodiment the reactor also comprises transportation means to transport the substantially solid reactants. It should be noted that in the abovementioned embodiment, the first and/or second metal is added at the start of the process. It is obvious from the above that the first and/or second metal optionally can also be added in a later or earlier stage of the process, thereby requiring an optional additional inlet. Also, during start-up of the process, but also during the process, compounds similar to Boudouard-carbon and in a suitable form, such as graphite powder, may be added to the metal-oxygen compounds to serve as the reducing agent in the reduction reaction of the metal-oxygen compounds, thereby optionally requiring one or more additional inlets for the carbon.

In a further embodiment according to the invention, the reactor also comprises means to reintroduce at least part of gaseous reaction products into the process. Moreover, the reactor may also comprise means to reintroduce at least part of substantially solid material resulting from the reduction of the metal-oxygen compounds into the process.

In a further embodiment these reactor regions may be physically separated to occur in separate reactors, enabling a more independent choice of operating parameters such as temperature and pressure.

In a further embodiment the reactor includes a fluidised bed. In still a further embodiment the reactor comprises a furnace chosen from the group of furnaces comprising rotary hearth furnaces, rotary kiln furnaces, shaft furnaces, cyclone furnaces, continuous batch-type furnaces.

In a preferred embodiment, the reactor has a substantially tubular, more preferably a substantially axi-symmetrical shape.

A specific embodiment of the present invention will now be explained by the following non-limitative examples and described with reference to the schematic drawing of which:

Fig. 1 shows schematically a device according to the invention.
Fig. 2 shows schematically an embodiment of a device according to the invention.
Fig. 3 shows schematically an embodiment of a device according to the invention with separated reaction regions.

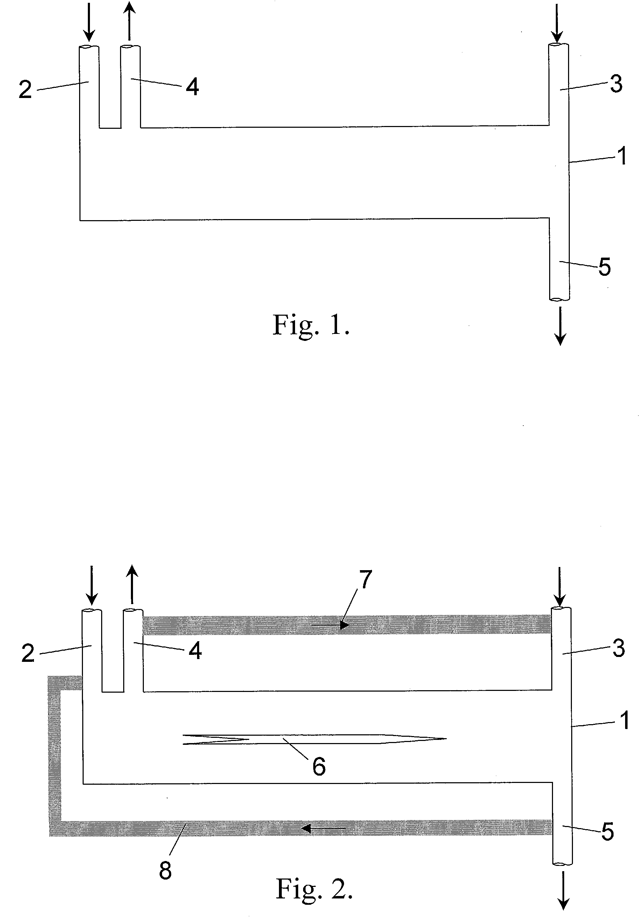

In Fig. 1 the invention is embodied in an apparatus for reducing metal-oxygen compounds according wherein the apparatus comprises a reactor 1, an inlet 2 for the metal-oxygen compounds, an inlet for the first and/or second metal (not shown, unless the first and/or second metal is added together with the metal-oxygen compounds, in which case the first and/or second metal inlet is 2 as well), an inlet 3 for a gaseous mixture comprising carbon-monoxide, heating means to heat the different parts of the reactor (not shown), an outlet 4 for the gaseous reaction products and an outlet 5 for the substantially solid material resulting from the reduction of the metal-oxygen compounds.

In Fig. 2 another embodiment of the invention is shown wherein the apparatus comprises a reactor 1, an inlet 2 for the metal-oxygen compounds, an inlet for the first and/or second metal (not shown, unless the first and/or second metal is added together with the metal-oxygen compounds, in which case the first and/or second metal inlet is 2 as well), an inlet 3 for a gaseous mixture comprising carbon-monoxide, heating or cooling means to heat or cool the different parts of the reactor (not shown), an outlet 4 for the gaseous reaction products and an outlet 5 for the substantially solid material resulting from the reduction of the metal-oxygen compounds, transportation means 6 to transport the solid reactants, means 7 to reintroduce at least part of gaseous reaction products from outlet 4 into the process, and means 8 to reintroduce at least part of substantially solid material resulting from the reduction of the metal-oxygen compounds.

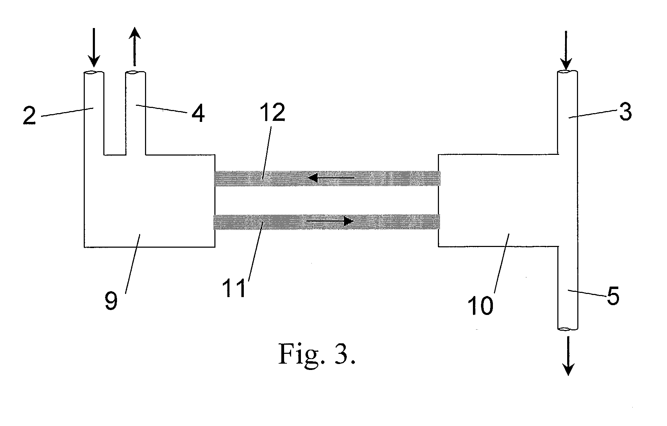

In Fig. 3 another embodiment of the invention is shown wherein the reactor comprises a first reactor part 9 where the generation of carbon by the Boudouard mainly occurs, a second reactor part 10 where the reduction of the metal-oxygen compounds mainly occurs, transport means 11 to transport the solid reactants from the first reactor part 9 to the second reactor part 10, transport means 11 to transport the gaseous mixture comprising carbon-monoxide from the second reactor part 10 to the first reactor part 9, an inlet 2 for the metal-oxygen compounds, an inlet for the first and/or second metal (not shown, unless the first and/or second metal is added together with the metal-oxygen compounds, in which case the first and/or second metal inlet is 2 as well), an inlet 3 for a gaseous mixture comprising carbon-monoxide, heating or cooling means to heat or cool the different parts of the reactor (not shown), an outlet 4 for the gaseous reaction products and an outlet 5 for the substantially solid material resulting from the reduction of the metal-oxygen compounds. This embodiment may also be equipped with means to reintroduce at least part of the gaseous reaction products from outlet 4 into the process, and means to reintroduce at least part of the substantially solid material resulting from the reduction of the metal-oxygen compounds as a first and/or second metal into the process through the catalyst inlet, but these are not shown in Fig. 3.

One or more optional inlets may be present in all three embodiments for the introduction of compounds similar to Boudouard-carbon and in a suitable form, such as graphite powder during start-up of the process and/or during the process.

Example 1

In a thermal gravimetry analyser a homogeneous mixture of iron oxide as the metal-oxygen compound, carbon as the reducing agent for reducing the metal-oxygen compound and iron as the first and second metal, was heated. The amount of carbon was chosen to be sufficient to enable a complete reduction of the iron oxide to metallic iron. The reduction in mass of the mixture forms a direct indication of the reduction of the metal-oxygen compound. In case of a complete reduction, a reduction of mass of about 12-15% is to be expected. These measurements showed that at temperatures between 650 and 850 °C a complete reduction of the iron oxide was achieved when powder of crystalline carbon such as crystalline graphite, synthetic graphite, elektrographite or Boudouard-carbon was used.

Powder coal, activated carbon or powder coke proved to be less effective insofar that the iron oxide was not or only partly reduced to iron below 900 °C. The activity of amorphous carbon for the reduction of the iron oxide proved to be lower than the activity of crystalline carbon such as graphite, but higher than the activity of powder coal, activated carbon or powder coke.

Example 2

In a reactor, comprising a stainless steel tube and a furnace, an extruder type screw was mounted as transportation means for solid reactants. A mixture of iron oxide, carbon similar to Boudouard-carbon and in a suitable form, and iron powder as a first metal, was introduced in the tube and brought to a temperature of between 650 °C and 850 °C. The iron oxide reduced to metallic iron quickly.

Example 3

In a reactor according to Figure 2, wherein a stainless steel tube forms the reactor, an extruder type screw was mounted as transportation means 6 for the solid reactants. The arrow indicates the transportation direction of the solid reactants. A mixture of iron oxide as the metal-oxygen compound and iron powder as a first metal was introduced through inlet 2 at one end of the tube and transported to the other end of the tube by the extruder screw 6. In counter flow, a hot gaseous mixture comprising carbon monoxide was introduced into the reactor through inlet 3, also providing the heat for the reduction reactions in the reactor. The temperature of the reactants at the entry of the gaseous mixture was about 900 °C and the temperature at the exit of the gaseous mixture of the solid reactants was about 550 °C. At the cool end of the reactor, in the first reaction region, Boudouard-carbon was formed from the carbon monoxide by the Boudouard reaction with the aid of the metallic iron which performs the role associated with a catalyst. The resulting carbon dioxide leaves the process through outlet 4 as a part of the gaseous reaction products. The Boudouard-carbon precipitated on the solid reactants and was transported by the extruder screw to the second reaction region together with the solid reactants. In said second reaction region the iron oxide is reduced by the Boudouard carbon resulting in metallic iron and a mixture of carbon monoxide and carbon dioxide. Part of the substantially solid iron may be reintroduced into the process by means 8 as a first metal through for example inlet 2 and part of the gaseous reaction products may be reintroduced by means 7 through for example inlet 3.

It is of course to be understood that the present invention is not limited to the embodiments and examples described above, but encompasses any and all embodiments within the scope of the claims and the description.

**Claims**

1. Method for reducing metal-oxygen compounds in which carbon is used as a reducing agent in a reduction reaction for reducing the metal-oxygen compounds **characterised in that** a first metal is used to aid the reduction reaction.

2. Method according to claim 1 **characterised in that** at least part of the first metal is formed from an intermediate compound taken from the group of compounds consisting of metalcarbides, metalhydrides and metalnitrides wherein the metal in the compound is the first metal, and wherein the compound optionally comprises oxygen.

3. Method according to claim 1 or 2 **characterised in that** the carbon is amorphous carbon and/or crystalline carbon, preferably graphite.

4. Method according to claims 1, 2 or 3 **characterised in that** the carbon is in the form of a powder.

5. Method according to any of the claim 1 to 4 **characterised in that** carbon monoxide is brought into contact with the metal-oxygen compounds and that carbon and carbon dioxide are formed by the Boudouard reaction from the carbon monoxide with the aid of a second metal.

6. Method according to claim 5 **characterised in that** in the reduction reaction for reducing the metal-oxygen compounds the oxygen of the metal-oxygen compounds is mainly bound to the carbon which is formed from the carbon monoxide by the Boudouard reaction.

7. Method according to claim 6 **characterised in that** more than 50%, preferably more than 70%, more preferably more than 80%, even more preferably more than 90% of the oxygen of the metal-oxygen compounds is bound to the carbon in the reduction reaction for reducing the metal-oxygen compounds.

8. Method according to any of the claims 1 to 7 **characterised in that** the first metal is the same as the second metal.

9. Method according to any of the claims 1 to 8 **characterised in that** the first and/or the second metal is the same as the metal in the metal-oxygen compounds.

10. Method according to any of the claims 1 to 9 **characterised in that** the metal-oxygen compounds are in the form of a powder.

11. Method according to claim 10 **characterised in**

**that** the metal-oxygen compounds are used in the form of a conglomerate, such as a pellet or sinter.

12. Method according to any of the claims 1 to 11 **characterised in that** the first and/or the second metal is in the form of a powder.

13. Method according to claim 12 **characterised in that** a mixture of powders of the first and/or second metal and metal-oxygen compounds is used in the form of a conglomerate, such as a pellet or sinter.

14. Method according to any of the claims 1 to 13 **characterised in that** the reduction reaction of the metal-oxygen compounds is performed in a continuous process.

15. Method according to claim 14 **characterised in that** the metal-oxygen compounds are transported in one direction and **in that** the carbon monoxide is transported in counter flow.

16. Method according to claim 14 or 15 **characterised in that** at least part of substantially solid products of the reduction reaction is reintroduced into the process.

17. Method according to any of the claims 14 to 16 **characterised in that** at least part of gaseous reaction products is reintroduced into the process.

18. Method according to any of the claims 5 to 17 **characterised in that** the temperature where the Boudouard reaction is performed is below 650°C, more preferably between 300 and 600 °C, an even more preferably between 450 and 550 °C.

19. Method according to any of the claims 1 to 18 **characterised in that** the metal-oxygen compounds comprise iron-oxygen compounds, such as iron oxide and/or iron-hydroxide and/or iron-carbonate.

20. Method according to any of the claims 1 to 19 **characterised in that** the first metal and/or the second metal comprises iron.

21. Method according to claim 19 or 20 **characterised in that** the temperature where the reduction of the metal-oxygen compounds is performed is between 550 and 900°C, more preferably between 650 and 850 °C, and even more preferably between 700 and 775 °C.

22. Method according to any of the claims 1 to 18 **characterised in that** the metal in the metal-oxygen compound(s) is Copper, Cobalt, Nickel, Ruthenium, Rhodium, Palladium, Platinum or Iridium.

23. Method for reducing metal-oxygen compounds according to any of the claims 1 to 22 **characterised in that** the metal-oxygen compounds comprises a mixture of at least two metal-oxygen compounds, wherein the metals in the metal-oxygen compounds are different and wherein the metals comprise Iron, Copper, Cobalt, Nickel, Ruthenium, Rhodium, Palladium, Platinum or Iridium.

24. Method according to any of the claims 1 to 23 **characterised in that** the reduction reaction is performed in a shaft furnace, such as a blast furnace.

25. Method according to any of the claims 1 to 23 **characterised in that** the reduction reaction of the metal-oxygen compounds is performed in a fluidised bed, a rotary hearth furnace, a rotary kiln furnace, a cyclone furnace, or a continuous batch-type furnace, to produce directly reduced metal.

26. Method according to any of the claims 1 to 21 **characterised in that** the metal-oxygen compounds comprise iron-oxygen-compounds and **in that** the reduction reaction of the iron-oxygen compounds is performed in a shaft furnace, such as a blast furnace, to produce iron.

27. Method according to any of the claims 1 to 21 **characterised in that** the metal-oxygen compounds are iron-oxygen-compounds and **in that** the reduction process of the iron-oxygen compounds is performed in a fluidised bed, a rotary hearth furnace, a rotary kiln furnace, a cyclone furnace, or a continuous batch-type furnace, to produce directly reduced iron.

28. Method according to any of the preceding claims to produce a substantially solid material comprising a metallic part and a non-metallic part **characterised in that** the substantially solid material is treated to separate the metallic part from a non-metallic part such as gangue or slag.

29. Method according to claim 28 **characterised in that** the metallic part is compressed to reduce its porosity.

30. Method according to claims 28 or 29 **characterised in that** the metallic part is rolled to form a slab, billet, bloom, rod, section or strip.

31. Method according to any of the claims 28 to 30 **characterised in that** the metallic part is extruded to form a profile, section or rod.

32. Method according to any of the claims 28 to 31 **characterised in that** the metallic part is formed into a near net shape product.

**33.** Apparatus **characterised in that** it comprises a reactor (1), an inlet for the metal-oxygen compounds (2), an inlet for a first metal, an inlet for a gaseous mixture comprising carbon-monoxide (3), optional heating or cooling means to heat or cool different parts of the reactor, an outlet for the gaseous reaction products (4) and an outlet for the substantially solid material resulting from the reduction reaction (5).

**34.** Apparatus according to claim 33 for reducing metal-oxygen compounds in a reduction reaction **characterised in that** the reactor comprises a first reaction region for generating carbon from the carbon monoxide by the Boudouard reaction and a second reaction region for reducing the metal-oxygen compounds.

**35.** Apparatus according to claim 33 or 34 **characterised in that** the reactor also comprises transportation means (6) to transport the solid reactants.

**36.** Apparatus according to any of the claims 33 to 35 **characterised in that** it also comprises means (7) to reintroduce at least part of gaseous reaction products into the process.

**37.** Apparatus according to any of the claims 33 to 36 **characterised in that** it also comprises means (8) to reintroduce at least part of substantially solid material resulting from the reduction reaction into the process.

**38.** Apparatus for reducing metal-oxygen compounds **characterised in that** it comprises a reactor which comprises a first reactor part (9) where the generation of carbon from the carbon monoxide by the Boudouard reaction mainly occurs, a second reactor part (10) where the reduction of the metal-oxygen compounds mainly occurs, transport means (11) to transport the solid reactants from the first reactor part (9) to the second reactor part (10), transport means (11) to transport the gaseous mixture comprising carbon-monoxide from the second reactor part (10) to the first reactor part (9), an inlet (2) for the metal-oxygen compounds, an inlet for a first and/or second metal, an inlet (3) for a gaseous mixture comprising carbon-monoxide, heating or cooling means to heat or cool the different parts of the reactor, an outlet (4) for the gaseous reaction products and an outlet (5) for the substantially solid material resulting from the second reduction reaction and optionally means to reintroduce at least part of the gaseous reaction products from outlet (4) into the process through inlet (3), and also optionally means to reintroduce at least part of substantially solid material resulting from the reduction of the metal-oxygen compounds into the process.

**39.** Apparatus according to any of the claims 33 to 38 **characterised in that** the reactor includes a fluidised bed.

**40.** Apparatus according to any of the claims 33 to 39 **characterised in that** the reactor comprises a furnace chosen from the group of furnaces comprising rotary hearth furnaces, rotary kiln furnaces, shaft furnaces, cyclone furnaces, continuous batch-type furnaces.

**41.** Apparatus according to claim 33 to 40 **characterised in that** the reactor is substantially tubular, preferably substantially axi-symmetrical.

Fig. 1.

Fig. 2.

Fig. 3.

**European Patent Office**

## EUROPEAN SEARCH REPORT

Application Number

EP 04 07 5552

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 1 471 544 A (BRITISH STEEL CORP;UNIV STRATHCLYDE) 27 April 1977 (1977-04-27) * the whole document * --- | 1-13, 18-20,23 | C22B5/10 C21B13/00 |
| X | US 2 979 396 A (LANGENBERG FREDERICK C) 11 April 1961 (1961-04-11) * claims 1 and 3; Figure 5; column 3, line 31 - column 4, line 30; column 4, line 69 - column 5, line 70 * --- | 1,14-17, 19,21, 22, 24-33, 35-37, 39-41 | |
| X | US 3 979 206 A (MIDDELHOEK SERVAAS ET AL) 7 September 1976 (1976-09-07) * claim 1; column 1, lines 19-23 and 42-45 * --- | 1,3,4 | |
| A | US 3 179 513 A (TOULMIN JR HARRY A) 20 April 1965 (1965-04-20) * column 4, lines 54-68 * ----- | 1-41 | |

TECHNICAL FIELDS SEARCHED (Int.Cl.7)

C22B
C21B

The present search report has been drawn up for all claims

| Place of search | Date of completion of the search | Examiner |
|---|---|---|
| MUNICH | 24 June 2004 | Bjoerk, P |

EPO FORM 1503 03.82 (P04C01)

## ANNEX TO THE EUROPEAN SEARCH REPORT
## ON EUROPEAN PATENT APPLICATION NO.

EP 04 07 5552

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2004

| Patent document cited in search report | | Publication date | Patent family member(s) | | Publication date |
|---|---|---|---|---|---|
| GB 1471544 | A | 27-04-1977 | DE | 2547574 A1 | 29-04-1976 |
| | | | JP | 51066215 A | 08-06-1976 |
| US 2979396 | A | 11-04-1961 | NONE | | |
| US 3979206 | A | 07-09-1976 | NL | 7402177 A | 20-08-1975 |
| | | | BE | 825614 A1 | 18-08-1975 |
| | | | BR | 7500955 A | 02-12-1975 |
| | | | CA | 1045828 A1 | 09-01-1979 |
| | | | DE | 2506566 A1 | 21-08-1975 |
| | | | ES | 434785 A1 | 16-03-1977 |
| | | | FR | 2261345 A1 | 12-09-1975 |
| | | | GB | 1498511 A | 18-01-1978 |
| | | | IL | 46641 A | 30-04-1978 |
| | | | IT | 1031799 B | 10-05-1979 |
| | | | JP | 1236956 C | 31-10-1984 |
| | | | JP | 50118915 A | 18-09-1975 |
| | | | JP | 59009608 B | 03-03-1984 |
| | | | NO | 750509 A ,B, | 19-08-1975 |
| | | | SU | 603350 A3 | 15-04-1978 |
| US 3179513 | A | 20-04-1965 | NONE | | |

EPO FORM P0459

For more details about this annex : see Official Journal of the European Patent Office, No. 12/82